Europäisches Patentamt

European Patent Office

Office européen des brevets

(19)

(11) Veröffentlichungsnummer: **0 259 854 B1**

(12) **EUROPÄISCHE PATENTSCHRIFT**

(45) Veröffentlichungstag der Patentschrift: 06.03.91

(51) Int. Cl.⁵: **F16K 15/03**, F16K 47/00

(21) Anmeldenummer: 87113181.9

(22) Anmeldetag: 09.09.87

(54) **Hydraulischer Dämpfungszylinder für Kipprückschlagklappen.**

(30) Priorität: 12.09.86 DE 3631113

(43) Veröffentlichungstag der Anmeldung:
16.03.88 Patentblatt 88/11

(45) Bekanntmachung des Hinweises auf die
Patenterteilung:
06.03.91 Patentblatt 91/10

(84) Benannte Vertragsstaaten:
AT CH FR GB IT LI NL SE

(56) Entgegenhaltungen:
FR-A- 2 400 157
GB-A- 2 056 626
US-A- 4 233 885

(73) Patentinhaber: **Bopp & Reuther Aktiengesellschaft**
**Carl-Reuther-Strasse 1**
**W-6800 Mannheim 31(DE)**

(72) Erfinder: **Fulst, Gerhard**
**Korbangel 5**
**W-6800 Mannheim 31(DE)**

## Beschreibung

Die Erfindung bezieht sich auf einen hydraulischen Dämpfungszylinder für Kipprückschlagklappen, der innen in das Klappengehäuse eingebaut ist und dessen Dämpfungskolben einen Dämpfungszapfen trägt, auf den beim Schließen der Rückschlagklappe ein an der Klappenscheibe sitzender Anschlag aufschlägt, wobei für das gebremste Entweichen der Dämpfungsflüssigkeit aus der Zylinderkammer Drosselöffnungen im Zylindermantel und für das selbsttätige Zurückführen des Dämpfungskolbens eine Rückstellfeder im Innern des Dämpfungszylinders vorgesehen sind.

Derartige, z.B. aus der GB-A-2056626 bekannte und in das Klappengehäuse von Kipprückschlagklappen eingebaute Innendämpfungszylinder haben den Zweck, harte Schläge beim Auftreffen der Klappenscheibe auf den Gehäusesitz zu vermeiden. So sind in das Klappengehäuse eingebaute Dämpfungszylinder bekannt, bei denen die Zylinderkammer über Drosselbohrungen mit der in der Rohrleitung strömenden Flüssigkeit in offener Verbindung steht, so daß beim Aufschlagen des Klappenscheibenanschlages auf den Dämpfungszapfen des Dämpfungskolbens die in der Zylinderkammer des Dämpfungszylinders enthaltene Rohrleitungsflüssigkeit über die Drosselöffnungen gebremst in das Klappengehäuse und damit in die Rohrleitung gedrückt wird.

Bei diesem bekannten Dämpfungszylinder läßt es sich häufig nicht vermeiden, daß mit der Rohrleitungsflüssigkeit mitgeführte Schmutzteilchen oder Sandkörnchen in das Innere des Dämpfungszylinders gelangen, die sich am Boden der Zylinderkammer absetzen und auch in den Spalt zwischen dem Dämpfungskolben und dem Zylindermantel eindringen können. Besonders beim Einbau der Rückschlagklappe in Rohrleitungen mit leicht oder stärker verschmutzter Flüssigkeit kam es deshalb in der Praxis vor, daß sich eine Anzahl Festkörperteilchen im Dämpfungszylinder ablagerten, die den Dämpfungskolben im Zylindermantel verklemmten. Der Dämpfungskolben konnte deshalb nicht mehr von der Rückstellfeder in die Ausgangsstellung zurückbewegt werden, so daß der Dämpfungszylinder wirkungslos wurde.

Aufgabe der Erfindung ist es, den Dämpfungszylinder so auszubilden, daß ein Verklemmen des Dämpfungskolbens auch bei leicht oder stärker verschmutzter Rohrleitungsflüssigkeit mit Sicherheit vermieden wird.

Die Lösung dieser Aufgabe wird in den kennzeichnenden Merkmalen des Patentanspruchs 1 gesehen.

Dadurch, daß der Dämpfungszylinder eine gegenüber der Rohrleitungsflüssigkeit dicht verschlossene Flüssigkeitskammer aufweist, die mit einer Fremdflüssigkeit als Dämpfungsflüssigkeit gefüllt ist, können keine in der Rohrleitungsflüssigkeit enthaltenen Schmutzteilchen mehr in die Dämpfungskammer eindringen, so daß die Dämpfungsflüssigkeit stets sauber bleibt und ein einwandfreies Gleiten des Dämpfungskolbens im Dämpfungszylinder und damit eine sichere Dämpfung des Klappenscheibenschlages auf Dauer gewährleistet ist. Da außerdem in die der Rohrleitungsflüssigkeit ausgesetzten Begrenzungswand der verschlossenen Flüssigkeitskammer ein oder mehrere Ausgleichsmembranen dicht eingesetzt sind, überträgt sich der Druck der Rohrleitungsflüssigkeit über diese Membranen auf die Fremdflüssigkeit in der geschlossenen Flüssigkeitskammer, wodurch eine besondere Anpassung des Dämpfungszylinders an den im Klappengehäuse herrschenden Druck entfällt. Gleichzeitig wird das beim Einschieben des Dämpfungskolbens durch das Eintauchen des Dämpfungszapfens in die Flüssigkeitskammer verdrängte Überschußvolumen durch elastische Aufweitung dieser Ausgleichsmembranen aufgefangen. Somit übernehmen die Ausgleichsmembranen selbsttätig sowohl den Druckausgleich zwischen der Rohrleitungsflüssigkeit und der Dämpfungsflüssigkeit als auch den Ausgleich des beim Ein- und Ausfahren des Dämpfungskolbens ab- und zuzuführenden Verdrängervolumens des Dämpfungszapfens.

Zweckmäßigerweise wird die Flüssigkeitskammer des Dämpfungszylinders entsprechend den Merkmalen des Anspruchs 2 aus einer vor dem Dämpfungskolben liegenden Zylinderkammer, aus einer hinter dem Kolben liegenden Umlenkkammer mit der beim Verschieben des Kolbens entstehenden Verdrängerkammer und aus einer durch die Membranen abgeschlossenen äußeren Ausgleichskammer gebildet. Dadurch wird eine druckverlustarme Verdrängung der Dämpfungsflüssigkeit aus der Zylinderkammer in die Verdrängerkammer und umgekehrt ermöglicht und der beim Aufschlagen der Klappenscheibe durch den Dämpfungskolben ausgelöste Druckstoß wird nur gebremst und damit schonend auf die äußere Ausgleichskammer und damit auf die die Ausgleichskammer nach außen abschließenden Membranen übertragen.

Ein besonders einfacher und übersichtlicher konstruktiver Aufbau des Dämpfungszylinders ergibt sich entsprechend den Merkmalen des Anspruchs 3 dadurch, daß in eine Zylinderbohrung eines Grundkörpers eine mit Drosselöffnungen versehene Laufbuchse eingeschoben ist, in der der Dämpfungskolben gleitet und die nach außen durch einen Führungsdeckel verschlossen ist. Dieser Führungsdeckelbildet den Anschlag für die Laufbuchse, läßt sich leicht in die Zylinderbohrung einschieben, abdichten und verriegeln und trägt gleichzeitig an der Innenstirnseite eine die Umlenkkammer bildende Ringausnehmung. Außerdem dient dieser Führungsdeckel in seinem mittleren Bereich zur Aufnahme einer Führungsbuchse mit Dichtring, die eine Gleitführung für den Dämpfungszapfen bildet.

Besitzt der Grundkörper gemäß den Merkmalen des Anspruchs 4 an einer oder mehreren Seiten durch äußere Abflachungen gebildete Begrenzungswände, in die bis zur Zylinderbohrung reichende Durchbrüche eingebracht sind, welche jeweils durch eine biegsame Flachmembran nach außen verschlossen sind, so lassen sich handelsübliche billige Flachmembranen verwenden und die Durchbrüche selbst bilden die äußere, durch die Flachmembranen nach außen abgeschlossene Ausgleichskammer.

Die Flachmembranen lassen sich nach den Merkmalen des Anspruchs 5 durch auf die abgeflachten Begrenzungswände aufgesetzte Halteringe in einfacher Weise mit dem Grundkörper dicht verschrauben, wobei die Flachmembranen in der Ausgangsstellung des Dämpfungszylinders in einem nach innen durchgebogenen Zustand eingespannt sind, damit sie beim Eintritt des Überschußvolumens in die Ausgleichskammer nicht einseitig zu stark nach außen gebogen und damit überlastet werden, sondern sich aus ihrer nach innen gebogenen Ausgangslage nur geringfügig nach außen durchbiegen.

Die Übertragung des vom Dämpfungskolben verursachten Druckstoßes auf die Membranen läßt sich weitgehend abschwächen, wenn entsprechend den Merkmalen des Anspruchs 6 die durch die Membranen nach außen abgeschlossene Ausgleichskammer über Radialaustritte mit der Umlenkkammer und über als Drosselöffnungen dienende Innenlängsnuten der Laufbuchse mit der Zylinderkammer vor dem Dämpfungskolben in offener Verbindung stehen. Durch die mehrfache Umlenkung und Drosselung der Dämpfungsflüssigkeit bis zu den Membranen wird namlich ein Teil der Druckstoßenergie aufgezehrt.

Die Erfindung wird anhand eines Ausführungsbeispieles in der Zeichnung näher erläutert, und zwar zeigt:

Fig. 1    eine Kipprückschlagklappe mit eingebautem Dämpfungszylinder gemäß der Erfindung im Längsschnitt,

Fig. 2    den Dämpfungszylinder nach Fig. 1 im Längsschnitt in vergrößertem Maßstab und

Fig. 3    den Dämpfungszylinder im Schnitt nach Linie III-III der Fig. 2.

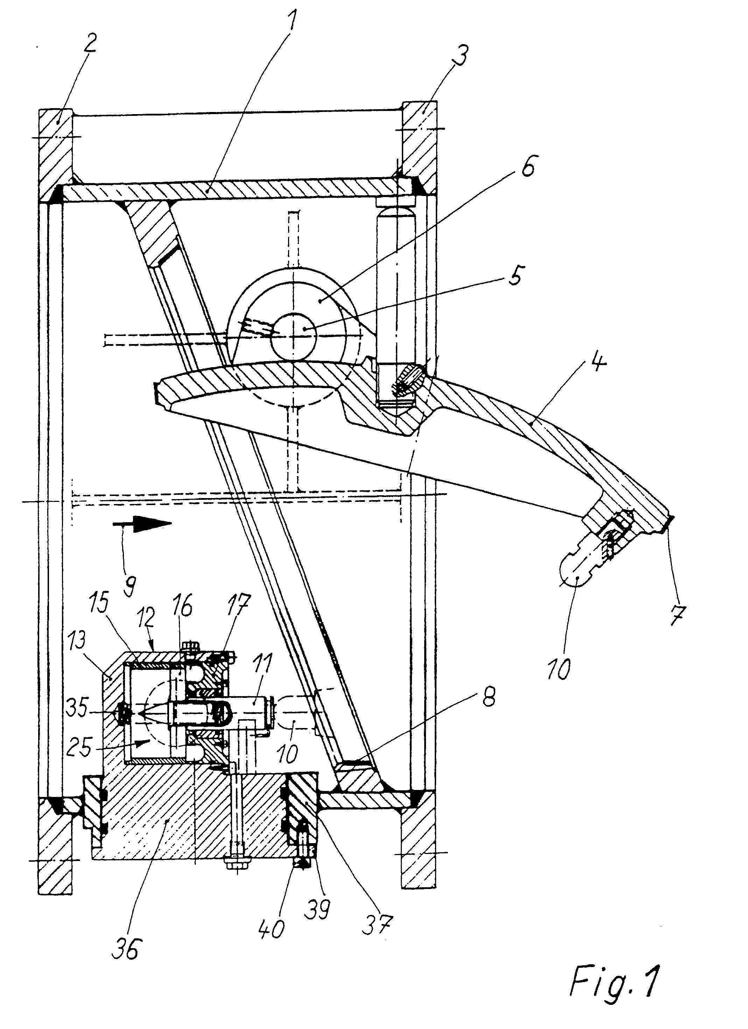

Die in der Fig. 1 gezeigte Kipprückschlagklappe besteht aus dem geschweißten Klappengehäuse 1 mit den beiden Anschlußflanschen 2 und 3, in dem die Klappenscheibe 4 im Lager 5 schwenkbar gelagert ist. Die Klappenscheibe 4 ist einseitig in den Lageraugen 6 aufgehängt, so daß sie beim Ausbleiben einer Strömung mit ihrem Dichtrand 7 durch ihr Eigengewicht in den Schrägsitz 8 der Klappe zurückfällt. Beim Anströmen der Klappenscheibe 4 in Richtung des Pfeiles 9 wird die Klappenscheibe geöffnet und von der Strömungsenergie in Offenstellung gehalten. Beim Ausbleiben der Strömung oder bei einer Rückströmung kippt die Klappenscheibe 4 sofort in die Schließstellung zurück. Damit hierbei harte Schläge auf den Klappensitz 8 vermieden werden, trägt die Klappenscheibe 4 am freien Schwenkende einen Schlagbolzen 10, der auf einen Dämpfungszapfen 11 eines im Innern des Klappengehäuses 1 sitzenden Dämpfungszylinders 12 aufschlägt, wie in der Fig. 1 gestrichelt dargestellt ist.

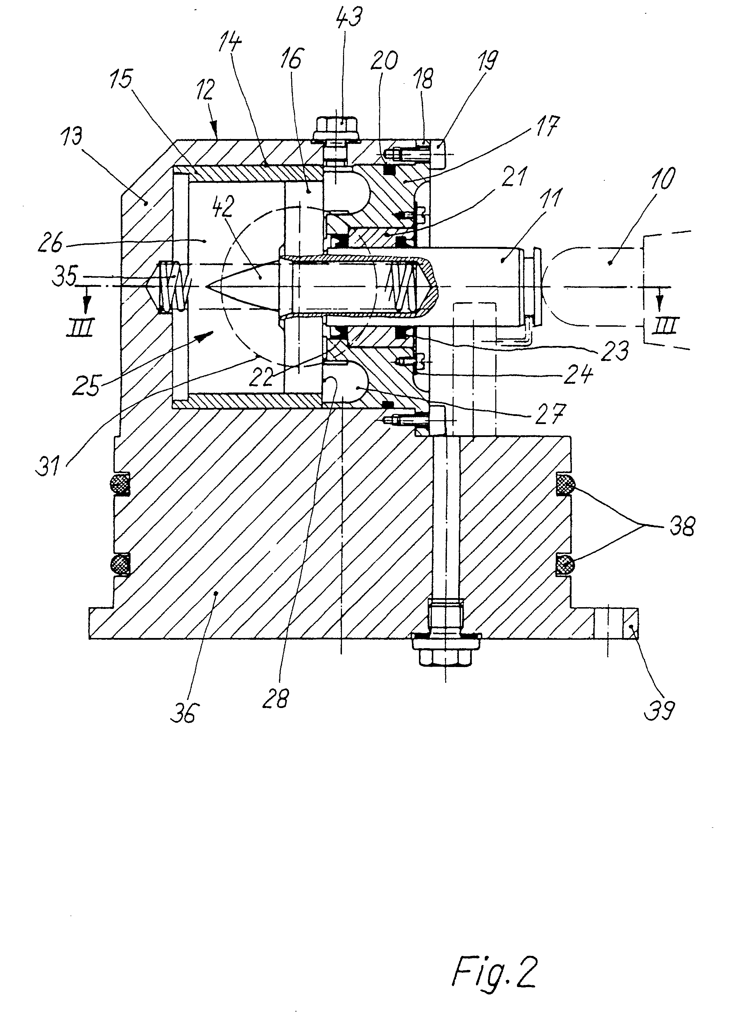

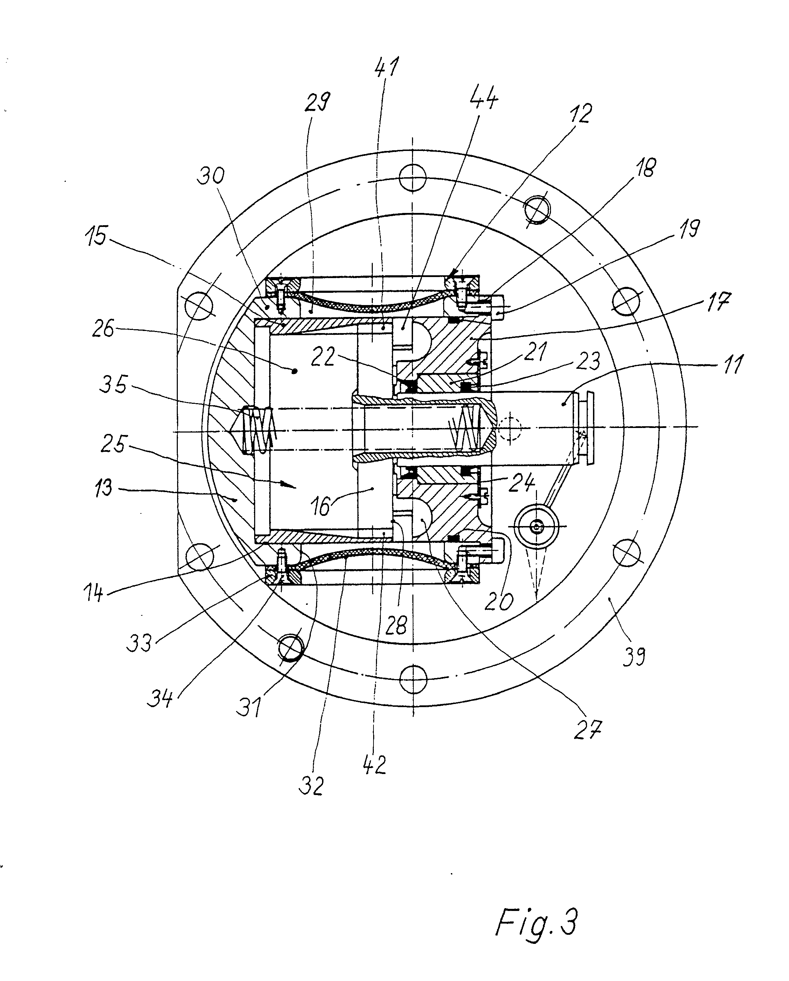

Der in den Figuren 1 bis 3 gezeigte Dämpfungszylinder 12 besteht aus einem Grundkörper 13, in dem eine in Strömungsrichtung verlaufende Zylinderbohrung 14 eingebracht ist. In diese Zylinderbohrung 14 ist eine Laufbuchse 15 eingeschoben, in der ein Dämpfungskolben 16 gleitet. Der Dämpfungszylinder 12 ist durch einen in die Zylinderbohrung 14 eingesetzten Führungsdeckel 17 nach außen abgeschlossen, der mit einem Flansch 18 versehen und über die Flanschschrauben 19 mit dem Grundkörper 13 verschraubt ist. Der Führungsdeckel 17 ist durch einen Dichtring 20 gegenüber der Zylinderbohrung 14 abgedichtet und nimmt innen eine eingepreßte Führungsbuchse 21 auf, in der der fest am Dämpfungskolben 16 sitzende Dämpfungszapfen 11 gleitet. Die Abdichtung des Führungsdeckels 17 erfolgt innen zum Dämpfungszapfen 11 hin über einen in den Führungsdeckel eingelegten und sich an der Stirnseite der Führungsbuchse 21 abstützenden Stützring 22. In axialer Richtung nach außen hin ist in die Führungsbuchse 21 noch ein mit einer Abstreiflippe versehender Abstreifring 23 eingesetzt, der ein Eindringen von Schmutzteilchen beim Einschieben des Dämpfungszapfens 11 verhindert und mit einem Abstreifblech 24 zusammenwirkt.

Der Dämpfungszylinder 12 besitzt eine nach außen dicht abgeschlossene Flüssigkeitskammer 25, die mit einer Fremdflüssigkeit als Dämpfungsflüssigkeit gefüllt ist. Diese geschlossene Flüssigkeitskammer 25 setzt sich aus der vor dem Dämpfungskolben 16 liegenden Zylinderkammer 26, aus einer im Führungsdeckel 17 vorgesehenen Umlenkkammer 27 mit der sich beim Verschieben des Dämpfungskolbens 16 hinter dem Kolben bildenden Verdrängerkammer 28 und aus einer Ausgleichskammer 29 zusammen. Der Grundkörper 13 besitzt an zwei gegenüberliegenden Seiten durch äußere Abflachungen gebildete Begrenzungswände 30, in die bis zur Zylinderbohrung 14 reichende kreisförmige Durchbrüche 31 eingebracht sind. Diese Durchbrüche 31 sind durch zwei flache biegsame Membranen 32 nach außen verschlossen. Die Membranen 32 sind über Halteringe 33 und Schrauben 34 dicht mit dem Grundkörper 13 verschraubt und in der Ausgangsstellung in einem nach innen durchgebogenen Zustand eingespannt. Die in der Längsachse des Dämpfungszylinders 12 vorgesehene Rückstellfeder 35 drückt den Dämpfungskolben 16 beim Öffnen der Klappenscheibe 4 selbsttätig wieder in die Ausgangsstellung.

Der den Dämpfungszylinder aufnehmende Grundkörper 13 ist mit einem Zylinderansatz 36 für den Einbau in das Klappengehäuse 1 versehen. Das Klappengehäuse 1 trägt zu diesem Zweck einen in den Gehäusemantel eingeschweißten Einschiebring 37. Der Dämpfungszylinder 12 wird mit dem Zylinderansatz 36 von unten in den Einschiebring 37 des Klappengehäuses 1 geschoben, über Dichtringe 38 nach außen abgedichtet und mit Hilfe des Flansches 39 und der Flanschschrauben 40 im Klappengehäuse 1 befestigt.

Die Längsachse des Dämpfungszylinders 12 mit dem Dämpfungszapfen 11 fluchtet in der Klappenschließstellung mit der Achse des Schlagbolzens 10 der Klappenscheibe 4, so daß der Dämpfungszapfen 11 mit dem Dämpfungskolben 16 beim Zuschlagen der Klappe axial vom Schlagbolzen 10 getroffen wird. Hierbei wird die Dämpfungsflüssigkeit über die beiden in der Laufbuchse 15 vorgesehenen, gegenüberliegenden Drosselschlitze 41 und 42 aus der Zylinderkammer 26 in die Umlenkkammer 27 verdrängt, so daß infolge der Drosselung der Dämpfungsflüssigkeit die Stoßdämpfung erfolgt.

Die Dämpfungsflüssigkeit strömt beim Verschieben des Dämpfungskolbens 16 aus der Umlenkkammer 27 in die sich hinter dem Kolben bildende Verdrängerkammer 28, wobei der Volumenausgleich für den in die Verdrängerkammer 28 eintauchenden Dämpfungszapfen 11 über die Ausgleichskammer 29 durch Ausbiegen der beiden Membranen 32 erfolgt. Die Membranen 32 sind von außen dem Druck der das Klappengehäuse durchströmenden Rohrleitungsflüssigkeit ausgesetzt, so daß in der mit der Fremdflüssigkeit gefüllten Flüssigkeitskammer 25 stets der Rohrleitungsdruck herrscht. Die gegenüberliegenden Drosselschlitze 41 und 42 der Laufbuchse 15 sind in Kolbeneinschubrichtung zunehmend verengt ausgebildet und laufen schließlich ganz aus, so daß die Bewegung der Klappenscheibe 4 kontinuierlich stärker gebremst wird. In der letzten Abbremsphase erfolgt die Verdrängung der Dämpfungsflüssigkeit nur über den geringen Spalt zwischen dem Dämpfungskolben 16 und der Laufbuchse 15. Das Einfüllen der Dämpfungsflüssigkeit in den Dämpfungszylinder 12 erfolgt über die Einfüllschraube 43. Die Umlenkkammer 27 steht über Radialaustritte 44 mit der durch die Membranen 32 nach außen abgeschlossenen Ausgleichskammer 29 in offener Verbindung.

## Ansprüche

1. Hydraulischer Dämpfungszylinder (12) für Kipprückschlagklappen, der innen in ein Klappengehäuse (1) eingebaut ist und dessen Dämpfungskolben (16) einen Dämpfungszapfen (11) trägt, auf den beim Schließen der Rückschlagklappe ein an der Klappenscheibe (4) sitzender Anschlag ((10) aufschlägt, wobei für das gebremste Entweichen der Dämpfungsflüssigkeit aus der Zylinderkammer Drosselöffnungen (41,42) im Zylindermantel und für das selbsttätige Zurückführen des Dämpfungskolbens eine Rückstellfeder (35) im Innern des Dämpfungszylinders vorgesehen sind, **dadurch gekennzeichnet,** daß der Dämpfungszylinder (12) eine gegenüber der durch das Klappengehäuse (1) strömenden Rohrleitungsflüssigkeit dicht verschlossene Flüssigkeitskammer (25) aufweist, die mit einer Fremdflüssigkeit als Dämpfungsflüssigkeit gefüllt ist und in deren der Rohrleitungsflüssigkeit ausgesetzten Begrenzungswand (30) eine oder mehrere Ausgleichsmembranen (32) dicht eingesetzt sind.

2. Dämpfungszylinder nach Anspruch 1, **dadurch gekennzeichnet,** daß die nach außen geschlossene Flüssigkeitskammer (25) aus einer in Einschiebrichtung vor dem Dämpfungskolben (16) liegenden Zylinderkammer (26), aus einer über die Drosselöffnungen (41,42) im Zylindermantel (15) mit der Zylinderkammer (26) verbundenen, hinter dem Dämpfungskolben (16) liegenden Umlenkkammer (27) mit der sich beim Verschieben des Dämpfungskolbens (16) bildenden Verdrängerkammer (28) und aus einer äußeren, durch die Membranen (32) nach außen abgeschlossenen Ausgleichskammer (29) gebildet wird.

3. Dämpfungszylinder nach Anspruch 1 oder 2, **dadurch gekennzeichnet,** daß der Dämpfungszylinder (12) eine in einem Grundkörper (13) eingebrachte Zylinderbohrung (14) aufweist, in die eine mit Drosselöffnungen (41,42) versehene, den Führungszylinder für den Dämpfungskolben (16) bildende Laufbuchse (15) eingeschoben ist, welche nach außen durch einen Führungsdeckel (17) verschlossen ist, der stirnseitig eine die Umlenkkammer bildende Ringausnehmung (27) und innen eine die Gleitführung für den Dämpfungszapfen (11) bildende Führungsbuchse (21) mit Dichtring (22) trägt.

4. Dämpfungszylinder nach einem oder mehreren der Ansprüche 1 bis 3, **dadurch gekennzeichnet,** daß der Grundkörper (13) im Bereich der Zylinderbohrung (14) an einer oder mehreren Seiten durch äußere Abflachungen gebildete Begrenzungswände (30) für die Flüssigkeitskammer (25) besitzt, in die bis zur Zylinderbohrung (14) reichende Durchbrüche (31) eingebracht sind, die jeweils durch eine biegsame Flachmenbram (32) nach außen verschlossen sind.

5. Dämpfungszylinder nach Anspruch 4, **dadurch gekennzeichnet,** daß die Flachmembran oder Flachmembranen (32) durch auf die abgeflachten Begrenzungswände (30) aufgesetzte, die Durchbrüche (31) umgebende Halteringe (33) in der Ausgangsstellung des Dämpfungszylinders (12) in einem nach innen durchgebogenen Zustand mit dem Grundkörper (13) dicht verschraubt sind.

6. Dämpfungszylinder nach den Ansprüchen 1 bis 5, **dadurch gekennzeichnet,** daß die den Führungszylinder für den Dämpfungskolben (16) bildende Laufbuchse (15) mit einer oder mehreren sich in Kolbeneinschiebrichtung verjüngenden und in die Umlenkkammer (27) einmündenden Innenlängsnuten (41,42) als Drosselöffnungen versehen ist und die durch die Membranen (32) nach außen abgeschlossene Ausgleichskammer (29) nur über diese Innenlängsnuten (41,42) und über Radialaustritte (44) der Umlenkkammer (27) mit der Zylinderkammer (26) vor dem Dämpfungskolben (16) in offener Verbindung steht.

**Claims**

1. Hydraulic shock absorber (12) for pivoting check valves, which is mounted into a valve body (1) and the damping piston (16) of which carries a damping pin (11) which an impact bolt (10) at the valve disk (4) strikes during closing of the pivoting check valve, throttle apertures (41,42) being provided in the cylinder case for the retarded discharge of the damping liquid out of the cylinder chamber and a resetting spring (35) in the inside of the shock absorber for the automatic restoring of the damping piston, characterized in that the shock absorber (12) has a liquid chamber (25) tightly closed with regard to the pipe liquid flowing through the valve body (1), said liquid chamber being filled with a foreign liquid as damping liquid and into the limiting wall (30) exposed to the pipe liquid one or more compensating diaphragms (32) are tightly placed.

2. Shock absorber according to claim 1, characterized in that the liquid chamber (25) closed to the outside is formed by a cylinder chamber (26) which is arranged in direction of insertion in front of the damping piston (16), by a reversing chamber (27) placed behind the damping piston (16) and connected with the cylinder chamber (26) via the throttle apertures (41, 42) within the cylinder case (15) with the displacement chamber (28) formed during the move of the damping piston (16) and by an outward compensation chamber (29) closed to the outside by the diaphragms (32).

3. Shock absorber according to claim 1 or 2 characterized in that the shock absorber (12) has a cylinder bore (14) integrated into a basic housing (13) into which a bushing (15) provided with throttle apertures (41, 42) and forming the guide cylinder for the damping piston (16) is inserted which is closed to the outside by a guide cover (17) which on its front carries a circular recess (27) forming the reversing chamber and on its inside a guide bush (21) with a seal ring (22) forming the sliding guide of the damping pin (11).

4. Shock absorber according to one or more of the claims 1 to 3 characterized in that in the zone of the cylinder bore (14) the basic housing (13) possesses on one or more sides limiting walls (30) for the liquid chamber (25) said walls being formed by outward flattenings, into which apertures (31) are installed up to the cylinder bore (14) which are each closed to the outside by a flexible flat diaphragm (32).

5. Shock absorber according to claim 4, characterized in that the flat diaphragm or flat diaphragms (32) are tightly screwed up with the basic housing (13) in a position sagged to the inside by retaining rings (33) mounted on the flattened limiting walls (33) and surrounding the apertures (31) in the initial position of the shock absorber (12).

6. Shock absorber according to the claims 1 to 5 characterized in that the bushing (15) forming the guide cylinder for the damping piston (16) is provided with one or more inner longitudinal grooves (41,42) as throttle apertures narrowed in the direction of insertion of the piston and entering the reversing chamber (27) and that the compensating chamber (29) closed to the outside by the diaphragms (32) is in open connection with the cylinder chamber (26) before the damping piston (16) only via these inner longitudinal grooves (41, 42) and via radial outlets (44) of the reversing chamber (27).

**Revendications**

1. Amortisseur hydraulique (12) pour des clapets antiretour pivotants qui est monté à l'intérieur d'un corps de clapet (1), et le piston d'amortissement (16) duquel porte un tenon d'amortissement (11) sur lequel tombe lors de la fermeture du clapet antiretour un boulon percuteur arrangé au battant du clapet (4) et où pour le décharge retardé du liquide d'amortissement de la chambre du cylindre des ouvertures d'étranglement (41, 42) sont prévues dans l'enveloppe du cylindre et pour le retour automatique du piston d'amortissement un ressort de rappel (35) est prévu à l'intérieur du cylindre d'amortissement, caractérisé en ce que le cylindre d'amortissement (12) possède une chambre de liquide (25) étanchement obturée vis-à-vis du liquide de tuyaux s'écoulant dans le corps de clapet (1) qui est remplie d'un liquide étranger comme liquide d'amortissement et dans la paroi limitative (30) dequelle un ou plusieurs diaphragmes compensateurs (32) sont étanchement placés.

2. Amortisseur hydraulique selon la revendication 1, caractérisé en ce que la chambre de liquide (25) obturée vers l'extérieur est formée d'une chambre cylindrique (26) située devant le piston d'amortissement (16) dans la direction d'introduction, d'une chambre de renvoi (27) positionnéé derrière le piston d'amortissement (16) et connectée avec la chambre cylindrique (26) par les ouvertures d'étranglement (41, 42) dans l'enveloppe du cylindre (15) avec la chambre de déplacement (28) formée lors du mouvement du piston d'amortissement (16) et d'une chambre de compensation (29) extérieure obturée vers l'extérieur par les diaphragmes (32).

3. Amortisseur hydraulique selon la revendication 1 ou 2, caractérisé en ce que l'amortisseur hydraulique (12) présente une forure de cylindre (14) dans un corps de base (13) dans laquelle une douille de piston (15) est insérée qui est pourvue d'ouvertures d'étranglement (41, 42) formant le cylindre de guidage pour le piston d'amortissement (16), la douille de piston (15) étant obturée vers l'extérieur par un couvercle de guidage (17) qui porte sur la face un creux circulaire (27) qui forme la chambre de renvoi et à l'intérieur une douille de guidage (21) avec une rondelle de joint (22) qui forme le guidage à glissement pour le tenon d'amortissement (11).

4. Amortisseur hydraulique selon une ou plusieurs des revendications 1 à 3, caractérisé en ce que le corps de base (13) possède dans la zone de la forure de cylindre (14) sur une ou plusieurs faces des parois limitatives (30) pour la chambre de liquide (25) formées par des aplatissements dans lesquelles des ouvertures (31) sont placées jusqu'à la forure de cylindre (14) qui sont chacune obturée vers l'extérieur par un diaphragme plat flexible (32).

5. Amortisseur hydraulique selon la revendication 4, caractérisé en ce que le diaphragme plat ou les diaphragmes plats (32) sont fermement vissés avec le corps de base (13) dans une position fléchie vers l'intérieur par des anneaux de blocage (33) placés autour des ouvertures (31) et positionnés sur les parois limitatives (30) aplaties dans la position initiale de l'amortisseur hydraulique (12).

6. Amortisseur hydraulique selon les revendications 1 à 5, caractérisé en ce que la douille de piston (15) qui forme le cylindre de guidage du piston d'amortissement (16) présente une ou plusieurs rainures longitudinales intérieures (41, 42) comme ouvertures d'étranglement réduites dans la direction d'introduction du piston et débouchant dans la chambre de renvoi (27) et que la chambre de compensation (29) obturée vers l'extérieur par les diaphragmes (32) n'est en connexion ouverte avec la chambre de cylindre (26) devant le piston d'amortissement (16) que par ces rainures longitudinales intérieures (41, 42) et par des sorties radiales (44) de la chambre de renvoi (27).

Fig.1

Fig.2

Fig.3